(19) Europäisches Patentamt
European Patent Office
Office européen des brevets

(11) **EP 1 610 096 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**05.09.2012 Patentblatt 2012/36**

(45) Hinweis auf die Patenterteilung:
**27.06.2007 Patentblatt 2007/26**

(21) Anmeldenummer: **05016369.0**

(22) Anmeldetag: **07.04.1998**

(51) Int Cl.:
***G01D 5/244*** *(2006.01)*

(54) **Positionsmesseinrichtung und Verfahren zum Betrieb einer Positionsmesseinrichtung**

Position measuring device and method for operating a position measuring device

Dispositif de mesure de position et procédé de fonctionnement d'un dispositif de mesure de position

(84) Benannte Vertragsstaaten:
**AT CH DE FR GB IT LI**

(30) Priorität: **16.04.1997 DE 19715742**
**25.09.1997 DE 19742317**

(43) Veröffentlichungstag der Anmeldung:
**28.12.2005 Patentblatt 2005/52**

(62) Dokumentnummer(n) der früheren Anmeldung(en) nach Art. 76 EPÜ:
**98106294.6 / 0 872 714**

(73) Patentinhaber: **Dr. Johannes Heidenhain GmbH**
**83292 Traunreut (DE)**

(72) Erfinder:
• **Hagl, Rainer**
**83352 Altenmarkt (DE)**
• **Hausschmid, Mathias**
**83349 Palling (DE)**
• **Spanner, Erwin**
**83278 Traunstein (DE)**
• **Streitwieser, Johann**
**83355 Grabenstätt (DE)**
• **Thiel, Jürgen**
**53125 Bonn (DE)**

(56) Entgegenhaltungen:
EP-A- 0 463 561    EP-A- 0 552 726
EP-A1- 0 298 183    EP-A1- 0 377 034
WO-A1-89/11080    DE-A1- 3 413 855
DE-B- 1 231 911    DE-B2- 2 212 220
DE-C1- 4 229 575    DE-C2- 3 024 716
DE-C2- 3 036 830    DE-C2- 3 224 005
DE-C2- 3 417 015    DE-C2- 4 443 898
DE-C2- 19 601 275    DE-T2- 69 117 219
JP-A- 02 099 826

• **PATENT ABSTRACTS OF JAPAN Bd. 014, Nr. 309 (P-1071), 4. Juli 1990 (1990-07-04) & JP 02 099826 A (MATSUSHITA ELECTRIC IND CO LTD), 11. April 1990 (1990-04-11)**
• **WALCHER, HANS: 'Digitale Lagemesstechnik', 1974, VDI-VERLAG, DÜSSELDORF**

**EP 1 610 096 B2**

## Beschreibung

Die vorliegende Erfindung betrifft eine Positionsmeßeinrichtung. Insbesondere lassen sich die erfindungsgemäßen Maßnahmen in Verbindung mit einer inkrementalen Positionsmeßeinrichtung vorteilhaft einsetzen.

Bekannte inkrementale Positionsmeßeinrichtungen ermöglichen neben der Übertragung von bereits digitalisierten bzw. rechteckförmigen Inkrementalsignalen auch die Übertragung von sinusförmigen, analogen Inkrementalsignalen an eine nachgeordnete Auswerteeinheit. Die analogen Inkrementalsignale können dabei auf unterschiedlichste Art und Weise erzeugt werden, beispielsweise über die optische, magnetische, induktive oder aber kapazitive Abtastung einer körperlich ausgebildeten Maßstabteilung. Daneben können die analogen, positionsabhängigen Inkrementalsignale auch über ein Interferometer generiert werden, wobei dann anstelle einer körperlichen Maßstabstruktur die Lichtwellenlänge bzw. entsprechende Bruchteile hiervon das Teilungsnormal bildet. Ebenso wäre grundsätzlich denkbar, Bruchteile anderer Wellenformen als Teilungsnormale zu verwenden, z.B. beim Einsatz von Mikrowellen, akust. Wellen etc..

Bei einer vorgesehenen Übertragung von analogen Inkrementalsignalen erfolgt erst auf Seiten der Auswerteeinheit eine Weiterverarbeitung der Signale, beispielsweise eine weitere Unterteilung in Form einer Interpolation. Die Übertragung der analogen Inkrementalsignale von der jeweiligen Positionsmeßeinrichtung an die Auswerteeinheit bietet einige Vorteile, wie etwa eine niedrige Übertragungsfrequenz bei gleichbleibenden Meßschritt sowie eine relativ hohe zulässige Verfahrgeschwindigkeit auch bei einem kleinen Meßschritt.

Werden nunmehr Positionsmeßeinrichtungen mit einer hohen Auflösung und entsprechend kleiner Signalperiode eingesetzt, beispielsweise LaserInterferometer oder aber interferentiell arbeitende optische Positionsmeßeinrichtungen, so können bei der Übertragung analoger Inkrementalsignale eine Reihe von Problemen resultieren. Liegen z.B. die Signalperioden derartiger Positionsmeßeinrichtungen im Bereich von etwa $0,5\mu m$, so ergeben sich bereits bei relativ langsamen Verfahrgeschwindigkeiten von 1m/sec hohe Signalfrequenzen der analogen Inkrementalsignale in der Größenordnung von ca. 2MHz. Zur Verarbeitung derart hochfrequenter analoger Inkrementalsignale sind jedoch nicht alle Auswerteeinheiten in der Lage. Zudem ergeben sich Probleme bei der möglichst störungsfreien Übertragung der hochfrequenten Inkrementalsignale über größere Entfernungen. Im Fall von Störungen bei der Signalübertragung resultieren wiederum Fehler bei der Positionsbestimmung über die Auswerteeinheit; so werden insbesondere bei einer auf Seiten der Auswerteeinheit erfolgenden Signalinterpolation zur Auflösungssteigerung ideale, sinusförmige Inkrementalsignale der Positionsmeßeinrichtung vorausgesetzt.

Darüberhinaus werden bei verschiedenen Anwendungen mitunter geschwindigkeitsabhängig unterschiedliche Anforderungen an die Auflösung der von der Positionsmeßeinrichtung gelieferten analogen Inkrementalsignale gestellt. Während dabei im Fall hoher Verfahrgeschwindigkeiten in der Regel keine extreme Genauigkeit bei Positionsbestimmung erforderlich ist, resultieren bei kleineren Relativgeschwindigkeiten üblicherweise höhere Anforderungen an die zur Verfügung stehende Auflösung der analogen Inkrementalsignale der Positionsmeßeinrichtung.

Aus der EP 463 561 A1 und der EP 0 552 726 A2 sind jeweils gattungsgemäße Verfahren und Schaltungsanordnungen bekannt, die es gestatten, die über eine Positionsmesseinrichtung erzeugten analogen Inkrementalsignale in ihrer Signalperiode zu modifizieren. Da darüber eine Auflösungssteigerung erreicht werden soll, resultieren am Ausgang der entsprechenden Schaltungsanordnungen Inkrementalsignale mit einer kleineren Signalperiode bzw. größeren Signalfrequenz im Vergleich zu den eingangsseitigen Inkrementalsignalen.

Aus der JP 02-099826 ist eine ähnliche Lösung bekannt, wobei jedoch die vorgeschlagene Schaltungsanordnung ausgangsseitig Rechtecksignale mit einer höheren Frequenz liefert.

Aufgabe der vorliegenden Erfindung ist es, eine Positionsmeßeinrichtung zu schaffen, über die zum einen die angesprochenen Probleme bei der Verwendung hochauflösender Positionsmeßeinrichtungen mit kleinen Signalperioden vermieden werden können. Zum anderen sollen auch die geschwindigkeitsabhängig unterschiedlichen Anforderungen an die Auflösung der Positionsmeßeinrichtung erfüllbar sein. Darüberhinaus ist ein möglichst fehlerfreier Meßbetrieb auch über längere Meßstrecken bzw. längere Meßzeiten wünschenswert.

Diese Aufgabe wird gelöst durch eine Positionsmeßeinrichtung mit den Merkmalen des Anspruches 1.

Vorteilhafte Maßnahmen zur Ausgestaltung der erfindungsgemäßen Positionsmeßeinrichtung ergeben sich aus den Maßnahmen in den jeweiligen abhängigen Ansprüchen.

Erfindungsgemäß wird nunmehr eine variable Signalperiode bzw. -frequenz der von der Positionsmeßeinrichtung an die nachgeordnete Auswerteeinheit übertragenen analogen Ausgangssignale bzw. Inkrementalsignale vorgesehen. Insbesondere ist es hierbei möglich, die ggf. zu hohe Signalfrequenz der analogen Inkrementalsignale im Fall hochauflösender Positionsmeßeinrichtungen oder im Fall hoher Relativgeschwindigkeiten zu reduzieren. Zu diesem Zweck ist erfindungsgemäß eine Signalperioden-Variationseinheit vorgesehen, die beispielsweise der Positionsmeßeinrichtung zugeordnet werden kann oder aber zwischen der Positionsmeßeinrichtung und der nachgeordneten Auswerteeinheit angeordnet ist. Selbstverständlich können neben den derart modifizierten Inkrementalsignalen mit veränderter Signalperiode respektive -frequenz auch die unveränderten analogen Inkrementalsignale zwischen der Positionsmeßeinrichtung und der nachgeordneten Auswerteeinheit übertragen werden.

Aufgrund der erfindungsgemäßen Maßnahmen ist somit gewährleistet, daß auch hochauflösende inkrementale Meßsysteme in Verbindung mit Auswerteeinheiten eingesetzt werden können, die grundsätzlich keine derart hohen Eingangsfrequenzen der analogen Inkrementalsignale zulassen. Ferner sind auch hohe Verfahrgeschwindigkeiten möglich, da die Signalperiode dann geeignet vergrößert werden kann, was in diesem Einsatzfall für eine Positionsbestimmung mit hinreichender Präzision ausreicht. Auf Seiten der Auswerteeinheit kann dann zur Auflösungssteigerung eine weitere elektronische Unterteilung bzw. Interpolation der übertragenen sinus- und/oder cosinusförmigen Inkrementalsignale in bekannter Art und Weise erfolgen.

Die Variation der Signalperiode der an die Auswerteeinheit übertragenen analogen Inkrementalsignale kann dabei sowohl automatisiert, beispielsweise in Abhängigkeit von der Geschwindigkeit, oder aber manuell durch den Anwender erfolgen, wenn beispielsweise die zugehörige Auswerteeinheit nur eine bestimmte maximale Eingangsfrequenz der analogen Inkrementalsignale verarbeiten kann.

Die erfindungsgemäßen Überlegungen lassen sich sowohl bei Positionsmeßeinrichtungen mit körperlich ausgebildeter Maßstabteilung einsetzen wie auch bei Positionsmeßeinrichtungen, die als Teilungsnormal z.B. die Lichtwellenlänge oder Bruchteile hiervon nutzen, d.h. bei Interferometern. Insbesondere im letztgenannten Fall ergeben sich auf Grundlage der vorliegenden Erfindung weitere vorteilhafte Ausgestaltungsmöglichkeiten. Diese bieten insbesondere Vorteile, wenn bei derartigen Positionsmeßeinrichtungen eine Konvertierung der Inkrementalsignal-Einheiten in bestimmte, vorzugebende -Einheiten gefordert ist und/oder diverse Umgebungseinflüsse zu kompensieren sind. Desweiteren gewährleisten die erfindungsgemäßen Maßnahmen auch einen fehlerfreien Betrieb einer derartigen Positionsmeßeinrichtung über längere Meßstrecken und/oder längere Meßzeiten.

Weitere Vorteile sowie Einzelheiten der erfindungsgemäßen Positionsmeßeinrichtung ergeben sich aus der nachfolgenden Beschreibung von Ausführungsbeispielen anhand der beiliegenden Figuren.

Dabei zeigt

Figur 1 eine schematische Darstellung eines ersten Ausführungsbeispiels einer erfindungsgemäßen Positionsmeßeinrichtung inklusive nachgeordneter Auswerteeinheit;

Figur 2 eine Blockschaltbild-Darstellung einer ersten Ausführungsform einer geeigneten Signalperioden-Variationseinheit, wie sie etwa in der Positionsmeßeinrichtung gemäß Figur 1 einsetzbar ist;

Figur 3 eine Darstellung des Signalverlaufes im Ausführungsbeispiel der Positionsmeßeinrichtung der Figur 1 kurz vor bzw. kurz nach der Variation der Signalperiode der analogen Inkrementalsignale;

Figur 4 eine Blockschaltbild-Darstellung einer zweiten Ausführungsform einer Signalperioden-Variationseinheit, wie sie insbesondere in einer als Interferometer ausgebildeten Positionsmeßeinrichtung einsetzbar ist.

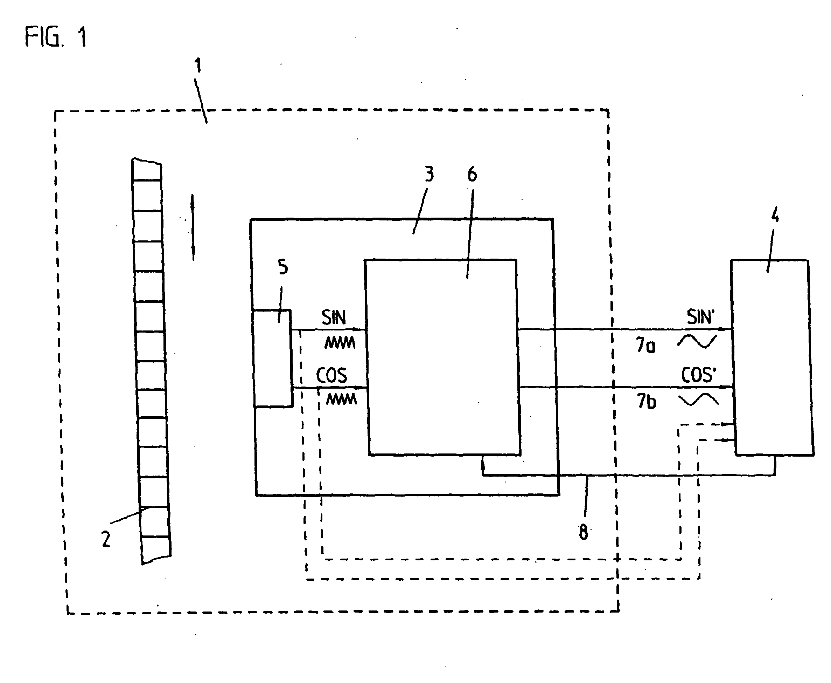

Das in Figur 1 dargestellte erste Ausführungsbeispiel einer erfindungsgemäßen Positionsmeßeinrichtung 1 umfaßt eine Maßstabteilung 2 sowie eine relativ dazu bewegliche Abtasteinheit 3. Die von der Positionsmeßeinrichtung 1 erzeugten, gegebenenfalls modifizierten analogen Inkrementalsignale SIN', COS' werden über Signalübertragungsleitungen 7a, 7b an eine nachgeordnete Auswerteeinheit 4 zur Weiterverarbeitung übertragen. Die Maßstabteilung 2 und die Abtasteinheit 3 sind etwa mit zueinander beweglichen Teilen einer Werkzeugmaschine verbunden, deren Relativposition zueinander hochexakt bestimmt werden soll. Als Auswerteeinheit 4 ist in diesem Fall eine übliche numerische Werkzeugmaschinensteuerung vorgesehen.

Neben dem schematisiert dargestellten Ausführungsbeispiel zur Erfassung von linearen Relativbewegungen können selbstverständlich auch rotatorische Positionsmeßeinrichtungen erfindungsgemäß ausgestaltet werden.

Bei der Relativbewegung von Maßstabteilung 2 und Abtasteinheit 3 werden über eine Signalerzeugungseinheit 5 periodisch modulierte, analoge inkrementalsignale SIN, COS erzeugt. Hierbei sind zumindest zwei, vorzugsweise um 90° phasenversetzte, periodisch modulierte Signale erforderlich, über die sowohl die Positionsinformation bezüglich der Relativlage von Maßstabteilung 2 und Abtasteinheit 3 als auch die entsprechende Richtungsinformation zur Verfügung steht. Grundsätzlich könnte auch ein anderer definierter Phasenversatz, beispielsweise 120°, vorgesehen sein.

Die Erzeugung der analogen Inkrementalsignale SIN, COS über die schematisiert angedeutete Signalerzeugungseinheit 5 kann in vielfältigster Form erfolgen, das heißt es können hierzu in bekannter Art und Weise optische, magnetische, induktive oder aber kapazitive Abtastprinzipien eingesetzt werden, wenn z.B. wie in Figur 1 gezeigt eine geeignete Maßstabteilung 2 abgetastet wird. In Figur 1 sind deshalb auch keine weiteren Details bezüglich des eigentlichen Abtastprinzipes dargestellt, sondern lediglich die hierzu erforderliche Signalerzeugungseinheit 5 schematisch angedeutet. Beispielsweise kann im Fall einer optischen Positionsmeßeinrichtung 1 eine reflektierend ausgebildete Maßstabteilung 2 mit der Abtasteinheit 3 abgetastet werden. Die zur Erzeugung der analogen Inkrementalsignale SIN, COS erforderliche Signalerzeugungseinheit 5 umfaßt dann ein oder mehrere Lichtquellen sowie optoelektronische Detektorelemente, über die die von der Maßstabteilung 2 reflektierten Strahlenbündel erfaßt werden.

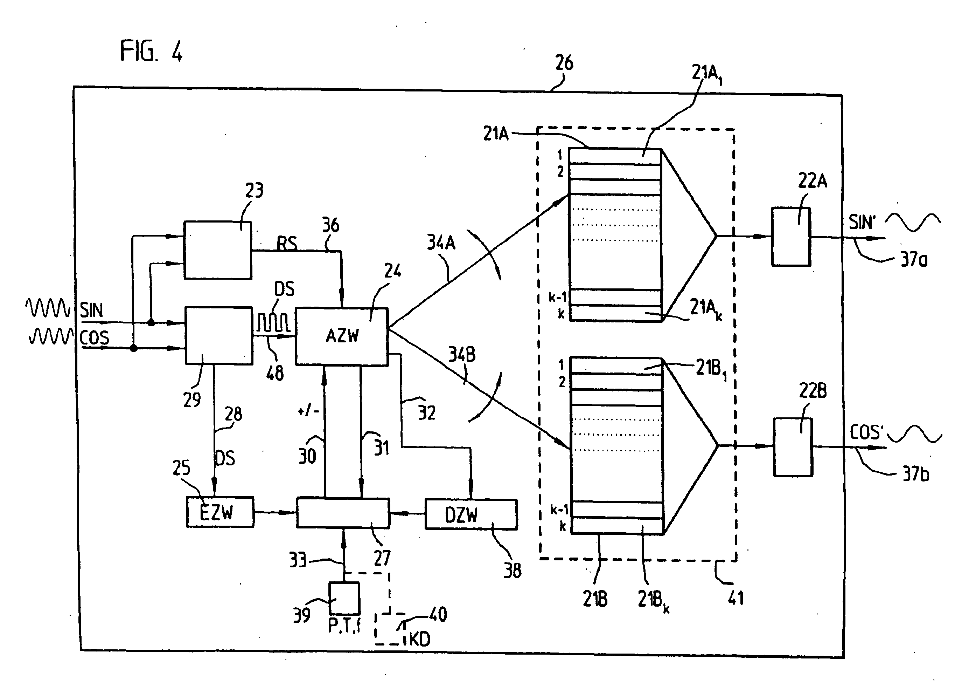

Desweiteren können die nachfolgend beschriebenen erfindungsgemäßen Maßnahmen grundsätzlich nicht nur in Positionsmeßeinrichtungen mit einer körperlich ausgebildeten Maßstabteilung eingesetzt werden; es ist vielmehr ebenso möglich, eine als Interferometer ausgebildete Positionsmeßeinrichtung damit auszustatten, bei der das Teilungsnormal durch die verwendete Lichtwellenlänge vorgegeben wird. Eine in besonderer Weise geeignete Einheit zur Verarbeitung der analogen Inkrementalsignale auf Seiten einer Positionsmeßeinrichtung, die als Interferometer ausgebildet ist, wird anhand der Figur 4 noch detailliert beschrieben.

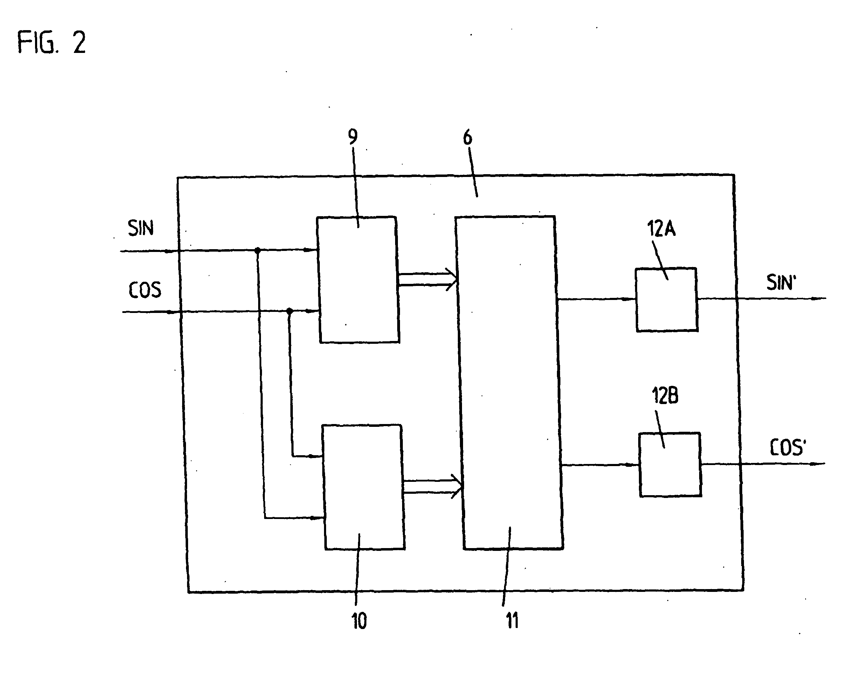

Die im dargestellten ersten Ausführungsbeispiel der Figur 1 über die Maßstab-Abtastung erzeugten analogen Inkrementalsignale SIN, COS werden einer Signalperioden-Variationseinheit 6 zugeführt, die in der gezeigten Ausführungsform in der Abtasteinheit 3 angeordnet ist. Über die Signalperioden-Variationseinheit 6 kann je nach gewünschter oder erforderlicher Signalperiode bzw. -frequenz die Signalperiode der analogen Abtastsignale SIN, COS definiert variiert werden. Details bezüglich einer möglichen Ausführungsform der Signalperioden-Variationseinheit 6 ergeben sich aus der nachfolgenden Beschreibung der Figur 2, in der eine erste Ausführungsform der Signalperioden-Variationseinheit 6 schematisiert dargestellt ist. Die von der Signalperioden-Variationseinheit 6 modifizierten analogen Inkrementalsignale SIN, COS werden anschließend über Signalübertragungsleitungen 7a, 7b als modifizierte analoge Inkrementalsignale SIN', COS' an die nachgeordnete Auswerteeinheit 4 zur Weiterverarbeitung übertragen. Hierbei weisen die modifizierten Inkrementalsignale SIN', COS' eine größere Signalperiode bzw. eine geringere Signalfrequenz als die ursprünglich auf Seiten der Positionsmeßeinrichtung 1 generierten analogen Inkrementalsignale SIN, COS auf.

Dargestellt ist in Figur 1 desweiteren noch eine Steuerleitung 8, die die Auswerteeinheit 4 mit der Positionsmeßeinrichtung 1, insbesondere mit der Signalperioden-Variationseinheit 6 verbindet. Über ein oder mehrere Steuerleitungen 8 kann seitens der Auswerteeinheit 4 eine gewünschte oder erforderliche Veränderung der Signalperiode mittels eines definierten Steuersignales angefordert werden. Als Steuerleitung 8 kann dabei sowohl eine separate, zusätzliche Verbindungsleitung vorgesehen werden; ebenso ist jedoch auch die Nutzung bereits vorhandener Verbindungsleitungen zwischen der Positionsmeßeinrichtung 1 und der Auswerteeinheit 4 zu diesem Zweck möglich. Im letztgenannnten Fall könnte beispielsweise ein entsprechendes Steuersignal auf die Versorgungsleitung oder eine andere geeignete Verbindungsleitung aufmoduliert werden.

In Figur 1 ist in strichlinierter Form zudem eine unmittelbare Verbindung zwischen der Signalerzeugungseinheit 5 und der Auswerteeinheit 4 angedeutet. Damit soll veranschaulicht werden, daß selbstverständlich auch die Übertragung der unveränderten Inkrementalsignale SIN, COS von der Positionsmeßeinrichtung 1 an die Auswerteeinheit 4 möglich ist, ohne daß demzufolge eine Veränderung der Signalperiode über die Signalperioden-Variationseinheit 6 erfolgt. Die Übertragung der unveränderten Inkrementalsignale SIN, COS kann dabei entweder wie in Figur 1 angedeutet über separate Signalübertragungsleitungen erfolgen.

Eine Veränderung der Signalperiode der analogen Inkrementalsignale SIN, COS, die an die Auswerteeinheit 4 übertragen werden, kann aus verschiedensten Gründen erforderlich sein. Beispielsweise liefert die hochauflösende Positionsmeßeinrichtung 1 analoge Inkrementalsignale SIN, COS mit einer relativ kleinen Signalperiode, so daß auf Seiten der Auswerteeinheit 4 eingangsseitig hohe Frequenzen der anliegenden Inkrementalsignale resultieren und von dieser nicht weiterverarbeitet werden können. In einem derartigen Fall ist eine Vergrößerung der Signalperiode bzw. eine Verringerung der Signalfrequenz erforderlich.

Daneben können auch bei hohen Verfahrgeschwindigkeiten zwischen Maßstabteilung 1 und Abtasteinheit 3 zu kleine Signalperioden bzw. zu hohe Signalfrequenzen der übertragenen analogen Inkrementalsignale resultieren und eine Vergrößerung der Signalperiode bzw. eine Verringerung der Signalfrequenz erforderlich machen. Werden später ggf. wieder geringere Verfahrgeschwindigkeiten erreicht, so kann selbstverständlich wieder auf die kleinere Signalperiode der analogen Inkrementalsignale SIN, COS umgeschaltet werden und es steht erneut eine höhere Auflösung bei der Positionsbestimmung zur Verfügung.

Vorzugsweise erfolgt im Fall einer erforderlichen Vergrößerung der Signalperiode eine Multiplikation der jeweiligen Signalperiode mit mindestens einem Signbalperioden-Variationsfaktor n. Beispielsweise können auch mehrere derartige -Faktoren n = 2, 4, 8, 16 vorgegeben werden, mit denen die Signalperiode der analogen Inkrementalsignale SIN, COS vergrößert wird, wenn dies aus den oben aufgeführten Gründen nötig ist.

Neben einem ganzzahligen Signalperioden-Variationsfaktor n kann erfindungsgemäß z.B. im Fall eines Interferometers selbstverständlich auch ein entsprechender nicht-ganzzahliger -Variationsfaktor n gewählt werden.

Die erforderliche Variation der Signalperiode der analogen Inkrementalsignale SIN, COS kann zum einen über die bereits erwähnte Übertragung eines entsprechenden Steuersignals auf einer Steuerleitung 8 von der Auswerteeinheit 4 an die Positionsmeßeinrichtung 1 erfolgen. Daneben kann jedoch alternativ auch vorgesehen werden, eine bestimmte gewünschte Signalperiode manuell vom Anwender beispielsweise über ein geeignetes - nicht dargestelltes - Schaltelement auf Seiten der Positionsmeßeinrichtung 1 einzustellen.

Im Fall der vorgesehenen Variation der Signalperiode über ein von der Auswerteeinheit 4 übertragenes Steuersignal ist es desweiteren möglich, eine geschwindigkeitsabhängige Variation der Signalperiode automatisiert vorzunehmen. Wird dabei etwa eine bestimmte Verfahrgeschwindigkeit überschritten, so kann durch die entsprechende Übertragung eines Steuersignales im Meßbetrieb auf die Ausgabe von analogen Inkrementalsignalen SIN', COS' mit geeignet vergrößerter Signalperiode umgeschaltet werden. Entsprechend wird beim Wieder-Unterschreiten dieser Verfahrgeschwindigkeit die Signalperiode der analogen Inkrementalsignale wieder verringert.

Eine derartige geschwindigkeitsabhängige Variation der Signalperiode der übertragenen analogen Inkrementalsignale SIN, COS kann dabei selbstverständlich auch in Verbindung mit mehr als zwei verfügbaren, unterschiedlichen Signalperioden realisiert werden. So können etwa für mehrere Geschwindigkeitsbereiche geeignete Signalperioden bzw. Multiplikationsfaktoren n für die analogen Inkrementalsignale SIN, COS vorgesehen werden, zwischen denen dann jeweils geschwindigkeitsabhängig umgeschaltet wird usw..

Die zu einer automatisierten Variation der Signalperioden der übertragenen, analogen Inkrementalsignale SIN, COS erforderliche Geschwindigkeitsdetektion kann auf mehrere Arten erfolgen. Beispielsweise kann hierzu ein separater Geschwindigkeitsdetektor vorgesehen werden. Ebenso ist es möglich, lediglich die Frequenz der analogen Inkrementalsignale SIN, COS zu erfassen, um auf diese Art und Weise eine Information bezüglich der aktuellen Verfahrgeschwindigkeit zur Verfügung zu haben. Die entsprechende Geschwindigkeitsinformation wird von der jeweiligen Auswerteeinheit 4 genutzt, um bei bestimmten Geschwindigkeiten eine Veränderung der Signalperiode der analogen Inkrementalsignale SIN, COS anzufordern.

Eine erste, mögliche Ausführungsform der Signalperioden-Variationseinheit 6 wird nachfolgend anhand der Darstellung in Figur 2 näher erläutert. Hierbei ist die gezeigte Ausführungsform insbesondere in Verbindung mit der Positionsmeßeinrichtung gemäß Figur 1 einsetzbar. Die von der Signalerzeugungseinheit 5 generierten analogen Inkrementalsignale SIN, COS werden der Signalperioden-Variationseinheit 6 zugeführt und gelangen eingangsseitig auf eine erste und zweite Interpolatoreinheit 9, 10. Während die erste Interpolatoreinheit 9 in bekannter Art und Weise eine Vielfachunterteilung der analogen Inkrementalsignale SIN, COS vornimmt, beispielsweise um den Faktor 100, erfolgt in der zweiten Interpolatoreinheit 10 ein Zählen der jeweiligen Signal-Nulldurchgänge. Ausgangsseitig liefern die beiden Interpolatoreinheiten 9, 10 jeweils ein Digitalwort, welches an einen nachgeordneten Speicherbaustein 11 übergeben wird bzw. zur Addressierung desselben dient. Der Speicherbaustein 11 enthält wiederum eine Reihe von Umrechnungstabellen für verschiedene Variationsfaktoren n der Signalperioden der analogen Inkrementalsignale SIN, COS. Pro Variationsfaktor n steht demzufolge eine entsprechende Umrechnungstabelle zur Verfügung. Je nach gewünschter Vergrößerung der Signalperiode wird über die Umrechnungstabelle jedem Positionswert der beiden Signale, der sich aus den beiden übergebenen Digitalwörtern ergibt, ein bestimmter veränderter Positionswert zugeordnet, so daß jeweils ein Signalverlauf mit vergrößerter Signalperiode resultiert. Ausgangsseitig liefert der Speicherbaustein 11 nach einer derartigen Signalverarbeitung Ansteuersignale für nachgeordnete D/A-Wandler, die quasi-analoge sinus- und cosinusförmige Inkrementalsignale SIN', COS' erzeugen. Diese modifizierten Inkrementalsignale SIN', COS' werden dann an die Auswerteeinheit übergeben.

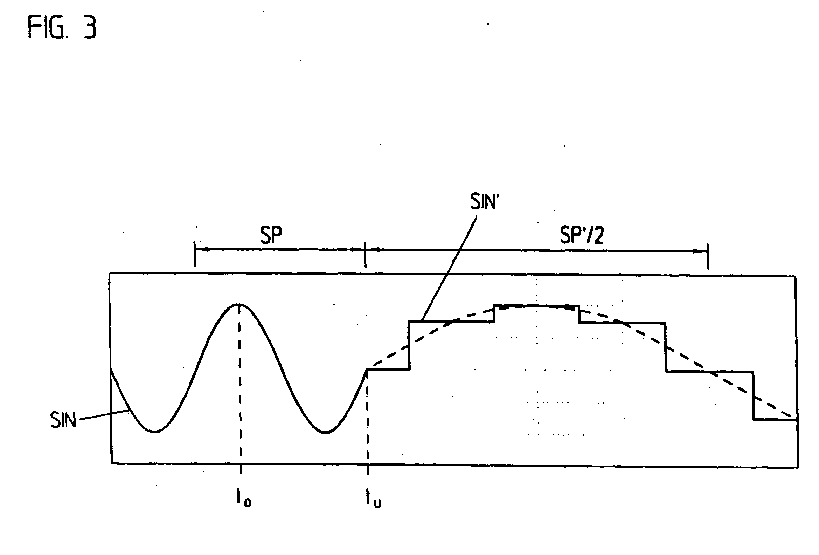

Eine Darstellung der Signalform zumindest eines analogen Inkrementalsignales SIN kurz vor bzw. kurz nach der Variation der Signalperiode SP ist in Figur 3 dargestellt. In der linken Hälfte von Figur 3 ist hierbei das von der Signalerzeugungseinheit 5 gelieferte analoge Inkrementalsignal SIN erkennbar, dessen Signalperiode SP verändert werden soll. Zum Zeitpunkt $t_0$ erfolgt dabei beispielsweise durch die oben erläuterte Übertragung eines Steuersignales von der Auswerteeinheit die Anforderung, die Signalperiode SP zu vergrößern. Nach einer weiteren Signalperiode SP des analogen Inkrementalsignales SIN wird dann zum Umschaltzeitpunkt $t_U$ über die Signalperioden-Variationseinheit die Signalperiode SP variiert, d.h. im dargestellten Fall ist eine Vergrößerung der Signalperiode SP um den Faktor n = 4 vorgesehen. Ab dem Umschaltzeitpunkt $t_U$ wird dann das in Signalperiode SP' und -frequenz modifizierte Inkrementalsignal SIN' an die Auswerteeinheit übertragen. Der Umschaltzeitpunkt $t_U$ ist hierbei derart definiert gewählt, daß bei einem Nulldurchgang des analogen Inkrementalsignales SIN die Umschaltung auf eine andere Signalperiode SP' erfolgt. In Figur 3 ist in stark übertriebener Form die Quantisierung des modifizierten Inkrementalsignales SIN' dargestellt; strichpunktiert ist die ideale sinusförmige Form des Inkrementalsignales SIN' eingezeichnet. Das quantisierte Inkrementalsignal SIN' entspricht dabei umso besser dem idealen, sinusförmigen Inkrementalsignal, je höher die Auflösung der D/A-Wandlereinheiten in der Signalperioden-Variationseinheit gewählt wird.

Eine zweite Ausführungsform einer geeigneten Signalperioden-Variationseinheit 26 ist in Figur 4 in einer schematisierten Darstellung gezeigt. Insbesondere eignet sich diese Variante in Verbindung mit einer als Interferometer ausgebildeten Positionsmeßeinrichtung. Selbstverständlich können dabei die am ersten Ausführungsbeispiel erläuterten Maßnahmen auch in Verbindung mit dem nachfolgenden Ausführungsbeispiel realisiert werden.

Neben alternativen Möglichkeiten zur Variation der Signalperiode bzw. der definierten Vorgabe der Signalperiode der an eine Auswerteeinheit übertragenen, analogen Inkrementalsignale seien am zweiten Ausführungsbeispiel nachfolgend auch verschiedenste Korrekturmittel beschrieben, die zur Eliminierung von unterschiedlichen Fehlern dienen, die bei der Positionsbestimmung auftreten können.

Das von einer bekannten - nicht dargestellten - Interferometer-Anordnung erzeugte Paar phasenversetzter Inkrementalsignale SIN, COS wird wiederum der Signalperioden-Variationseinheit 26 zugeführt. Diese übernimmt wie im vorhergehenden Beispiel u.a. die gewünschte Variation der Signalperiode und liefert ausgangsseitig die entsprechend modifizierten analogen Inkrementalsignale SIN', COS', welche über die Signalübertragungsleitungen 37a, 37b an eine - nicht gezeigte - Auswerteeinheit zur Weiterverarbeitung übertragen werden. Dort kann beispielsweise eine elektronische Signalinterpolation erfolgen etc..

**EP 1 610 096 B2**

Die von der Positionsmeßeinrichtung bzw. vom Interferometer gelieferten Inkrementalsignale SIN, COS werden in der Signalperioden-Variationseinheit 26 einer Interpolatoreinheit 29 sowie einer Richtungserkennungseinheit 23 zugeführt. Über die Interpolatoreinheit 29 erfolgt hierbei eine elektronische weitere Unterteilung der Eingangssignale SIN, COS in bekannter Art und Weise, d.h. die Interpolatoreinheit 29 liefert ausgangsseitig interpolierte Digitalsignale DS bzw. Rechteckimpulse mit einer höheren Frequenz als die Eingangssignale SIN, COS. Mit Hilfe der Richtungserkennungseinheit 23 wird auf Grundlage der beiden um 90° phasenversetzten Inkrementalsignale SIN, COS ein Richtungssignal RS bezüglich der Bewegungsrichtung der beiden zueinander beweglichen Teile erzeugt, deren Relativposition bestimmt werden soll.

Die interpolierten Digitalsignale DS wie auch das Richtungssignal RS werden über die Datenleitungen 36 und 38 einer Adreßzählereinheit 24 zugeführt. Je nach Bewegungsrichtung bzw. empfangenem Richtungssignal RS erfolgt in der Adreßzählereinheit 24 eine Veränderung des Adreßzählerwertes AZW. Im Fall einer Vorwärtsbewegung wird bei jedem Rechteckimpuls der Adreßzählerwert AZW beispielsweise um einen Wert hochgesetzt bzw. weitergezählt; im Fall der Rückwärtsbewegung erfolgt bei jedem Rechteckimpuls ein Heruntersetzen des Adreßzählerwertes AZW bzw. ein Zurückzählen. Wenn kein Rechteckimpuls bzw. Digitalsignal DS von der Interpolatoreinheit 29 anliegt bleibt der Adreßzählerwert AZW unverändert.

Der Adreßzählereinheit 24 nachgeordnet ist ein Speicherbaustein 41 vorgesehen, der im dargestellten Ausführungsbeispiel zwei Umrechnungstabellen 21A, 21B in Form einer Sinus- bzw. Cosinustabelle enthält. Die Umrechnungstabellen 21A, 21 B bestehen aus jeweils k adressierten Tabellenbereichen $21A_1$ - $21A_k$, $21B_1$ - $21B_k$, wobei in den jeweils k Tabellenbereichen $21A_1$ - $21A_k$, $21 B_1$ - $21B_k$ in digitaler Form die Signalamplitudenwerte mindestens einer Periode einer Sinus- bzw. Cosinus-Funktion abgelegt sind. Die einzelnen k Tabellenbereiche $21A_1$ - $21A_k$, $21B_1$ - $21B_k$ können über Adreßzeiger 34A, 34B von der Adreßzählereinheit 24 angesteuert werden. Die Signalamplitudenwerte der derart angesteuerten Tabellenbereiche $21A_1$ - $21A_k$, $21B_1$ - $21B_k$ werden anschließend jeweils an D/A-Wandlereinheiten 22A, 22B übermittelt, die hieraus wiederum die analogen Inkrementalsignale SIN', COS' erzeugen, welche an die Auswerteinheit übertragen werden. Den D/A-Wandlereinheiten 22A, 22B kann desweiteren jeweils eine geeignete - nicht dargestellte - Filterelektronik nachgeordnet werden, die die resultierenden analogen Inkrementalsignale SIN', COS' vor der Übertragung an die Auswerteeinheit geeignet glättet.

Im dargestellten Ausführungsbeispiel ist ein Ausgang der Adreßzählereinheit 24 vorgesehen, über den zwei Adreßzeiger 34A, 34B angesprochen werden, die jeweils wiederum eine Umrechnungstabelle 21A, 21 B ansteuern.

Daneben sind jedoch auch alternative Ausführungsvarianten im Rahmen der vorliegenden Erfindung realisierbar. So könnte in einer zweiten Ausführungsform die Adreßzählereinheit ausgangsseitig lediglich einen einzigen Adreßzeiger aufweisen, der wiederum lediglich eine einzige Umrechnungstabelle ansteuert. Die Tabellenbereiche der in diesem Fall zu wählenden, kombinierten Umrechnungstabelle besitzen dabei die doppelte Speicherbreite im Vergleich zum ersten Ausführungsbeispiel, so daß dort jeweils in kombinierter Form die digitalen Signalamplitudenwerte der Sinus- und Cosinus-Funktion abgelegt werden können.

In einer dritten Ausführungsform schließlich könnte vorgesehen werden, daß zwei Adreßzeiger der Adreßzählereinheit auf eine einzige Umrechnungstabelle zeigen, in der z.B. lediglich die digitalen Signalamplitudenwerte einer Sinus-Funktion abgelegt sind. Zwischen den beiden Adreßzeigern ist jedoch ein Phasenversatz von 90° vorgegeben, so daß auf diese Art und Weise die phasenversetzten Signalamplitudenwerte einer Sinus- und einer Cosinus-funktion für die Ausgangssignale an die nachgeordneten D/A-Wandler übergeben werden können.

Die ausgangsseitig variablen Signalperioden SP' der analogen Inkrementalsignale SIN', COS' werden im gezeigten Ausführungsbeispiel auf die nachfolgend erläuterte Art und Weise erzeugt. Hierbei ist eine Variation der Eingangs-Signalperioden SP um lediglich ganzzahlige Signalperioden-Variationsfaktoren n möglich ist, d.h. SP'= n * SP. So können etwa im Beispiel ausgangsseitig Signalperioden SP' der analogen Inkrementalsignale SIN', COS' von $1\mu m$, $2\mu m$, $4\mu m$ und $10\mu m$ erzeugt werden; die ausgangsseitig verfügbaren Signalperioden SP' stehen demzufolge jeweils in einem ganzzahligen Verhältnis zueinander. Eingangsseitig ist im Fall der Verwendung eines He-Ne-Lasers mit der Emissionswellenlänge $\lambda \cong 633nm$ im Interferometer eine Signalperiode SP der Signale SIN, COS von $\lambda/2 = 633/2nm$ vorgegeben. In den beiden Umrechnungstabellen 21A, 21 B werden in diesem Beispiel dann die digitalen Signalamplitudenwerte einer Sinus- bzw. Cosinus-Funktion mit einer Signalperiode abgelegt, die das kleinste gemeinsame Vielfache der Ausgangs-Signalperioden SP' darstellt, d.h. Sinus- und Cosinus-Funktionen mit einer Signalperiode von $20\mu m$.

Je nach ausgangsseitig erforderlicher Signalperiode werden die Adreßzeiger 34A, 34B bei jedem Rechteckimpuls von der Interpolatoreinheit 29 mit unterschiedlichen Ansteuer-Schrittweiten inkrementiert, d.h. unterschiedliche Tabellenbereiche $21A_1$ - $21A_k$, $21B_1$ - $21B_k$ der Umrechnungstabellen 21A, 21 B angesprochen. Werden dann z.B. ausgangsseitig analoge Inkrementalsignale SIN', COS' mit der Signalperiode $10\mu m$ gewünscht, so beträgt die Ansteuer-Schrittweite bei jedem Rechteckimpuls 2 Tabellenschritte, d.h. nach dem Tabellenberereich $21A_1$ wird anschließend vom Adreßzeiger der Tabellenbereich $21A_3$ angesteuert usw.. Im Fall einer erforderlichen Signalperiode von $4\mu m$ beträgt die Ansteuer-Schrittweite für die Adreßzeiger 34A, 34B 5 Tabellenschritte etc.. Jedem Signalperioden-Variationsfaktor n ist demzufolge eine bestimmte Ansteuer-Schrittweite der Adreßzeiger 34A, 34B zugeordnet.

In den Umrechnungstabellen 21A, 21B werden bei einer derartigen Ausführungsform der Signalperioden-Variationseinheit 26 demzufolge die digitalen Signalamplitudenwerte von Sinus- und/oder Cosinus-Funktionen abgelegt, die der größten ausgangsseitig gewünschten Signalperiode SP' der analogen Inkrementalsignale SIN', COS' entspricht oder aber in einem ganzzahligen Verhältnis zu allen gewünschten Signalperioden SP' der analogen Inkrementalsignale SIN', COS' steht.

Alternativ zu einer derartigen Realisierung der variablen Signalperiode der analogen Inkrementalsignale kann ähnlich dem vorhergehend beschriebenen Ausführungsbeispiel der Figur 2 vorgesehen werden, im entsprechenden Speicherbaustein der Signalperioden-Variationseinheit für jede gewünschte Auflösung bzw. für jede erforderliche ausgangsseitige Signalperiode eine separate Umrechnungstabelle für die Sinus- und/oder Cosinus-Funktion abzulegen. Selbstverständlich können die beiden erwähnten Möglichkeiten auch geeignet miteinander kombiniert werden. Beispielsweise ist dabei etwa denkbar, bestimmte ganzzahlige Signalperioden-Verhältnisse über die anhand von Figur 4 erläuterte Variante zu realisieren, während andere Signalperioden der analogen Inkrementalsignale auf der Basis separater Umrechnungstabellen wie vorab erläutert realisiert werden usw..

Wie bereits oben angedeutet, enthält die Signalperioden-Variationseinheit 26 dieses Ausführungsbeispieles desweiteren verschiedene Korrekturmittel, um Fehler bei der Positionsbestimmung bzw. Signalperioden-Variation zu eliminieren bzw. zu minimieren. Als Korrekturmittel seien dabei eine Eingangszählereinheit 25, eine Durchlaufzählereinheit 38 sowie eine Prozessoreinheit 27 bezeichnet, deren Arbeitsweise innerhalb der Signalperioden-Variationseinheit 26 nachfolgend erläutert wird.

Die Ausgangssignale der bereits oben erwähnten Interpolatoreinheit 29 in Form von Digitalsignalen DS bzw. Rechteckimpulsen werden über die Datenleitung 28 auch der Eingangszählereinheit 25 zugeführt, d.h. der aktuelle Eingangszählerwert EZW stellt die Anzahl bislang übermittelter Rechteckimpulse der Interpolatoreinheit 29 dar. Durch Multiplikation des Eingangszählerwertes EZW mit der vorgegebenen Signalperiode SP, d.h. dem entsprechenden Bruchteil der Wellenlänge des Interferometers in Luft $\lambda_{Luft}$, bei einer Vierfach-Auswertung ohne weitere Interpolation üblicherweise $\lambda_{Luft}/8$, ergibt sich somit der aktuelle Sollpositions-Meßwert SPM bei der laufenden Positionsbestimmung:

$$SPM = EZW * \lambda_{Luft}/8 \qquad (Gl.\ 1)$$

$\lambda_{Luft}/8$ stellt dabei die Signalperiode SP der Eingangssignale SIN, COS dar.

Eine derartige Ermittlung des Sollpositions-Meßwertes SPM in Form der erwähnten Multiplikation erfolgt über die der Eingangszählereinheit 25 nachgeordnete Prozessoreinheit 27. Die -einheit 27 kann dabei selbstverständlich auch alternativ zu einem Prozessor ausgebildet werden, beispielsweise als geeignete Digital-Logik etc..

Der ebenfalls bereits oben erwähnten Adreßzählereinheit ist eine Durchlaufzählereinheit 38 nachgeordnet. Der bestimmte Durchlaufzählerwert DZW stellt damit die Anzahl der bislang erfolgten Durchläufe der Adreßzeiger 34A, 34B durch die Umrechnungstabellen 21A, 21 B dar bzw. den Anteil ganzer Signalperioden am aktuellen Istpositions-Meßwert IPM. In Verbindung mit dem gerade aktuellen Adreßzählerwert AZW, der über die Datenleitung 31 an die Prozessoreinheit 27 übergeben wird, läßt sich in der Prozessoreinheit 27 daraus der aktuelle Istpositions-Meßwert IPM bestimmen:

$$IPM = (DZW + AZW/k) * SP' \qquad (Gl.\ 2)$$

Nach einer derartigen Ermittlung von Soll- und Ist-Positions-Meßwert SPM, IPM erfolgt anschließend über die Prozessoreinheit 27 ein Vergleich der beiden Meßwerte SPM und IPM. Wird eine Abweichung zwischen den beiden Meßwerten SPM und IPM festgestellt, so wird anschließend von der Prozessoreinheit 27 über die Datenleitung 30 die Adreßzählereinheit 24 derart angesteuert, daß der Adreßzählerwert AZW korrigierend erhöht oder verringert wird. Als Folge des geeignet erhöhten oder aber verringerten Adreßzählerwertes AZW werden von den Adreßzeigern 34A, 34B wiederum andere Tabellenbereiche $21A_1$ - $21A_k$, $21B_1$ - $21B_k$ der Umrechnungstabellen 21A, 21 B angesteuert und damit korrigierte analoge Inkrementalsignale SIN', COS' generiert.

Auf diese Art und Weise lassen sich Abweichungen zwischen den Ist- und Sollpositionsmeßwerten IPM, SPM und damit Fehler in der Positionsmessung eliminieren oder zumindest minimieren. Die derart korrigierbaren Fehler können hierbei verschiedene Ursachen haben.

Eine erste Fehlerquelle liegt im nicht-ganzzahligen Verhältnis der eingesetzten Laser-Wellenlänge $\lambda$, d.h. dem verwendeten Teilungsnormal, zu den üblichen Einheiten, wie etwa der vorgegebenen Signalperiode SP' der analogen Inkrementalsignale SIN', COS', die z.B. in metrischer Form vorgegeben sind. So ergibt sich bei jedem Durchlauf einer Umrechnungstabelle 21A, 21 B und dem Erzeugen der gewünschten Ausgangssignalperiode SP' ein Fehler im ermittelten Istpositions-Meßwert IPM, der u.a. von der Anzahl k der vorgesehenen Tabellenbereiche $21A_1$ - $21A_k$, $21B_1$ - $21B_k$ abhängt. Mit mehrmaligem Durchlaufen der Umrechnungstabellen 21A, 21 B resultiert ein kumulativer Fehler, so daß letztlich mit zunehmender Meßdauer und/oder Meßstrecke die Positionsbestimmung immer ungenauer würde.

Aufgrund der vorab erläuterten Maßnahmen ist über die Korrekturmittel und den ständigen Vergleich von Soll- und Istpositions-Meßwert SPM, IPM jedoch gewährleistet, daß im Fall eines Fehlers, der größer als die kleinste Ansteuer-Schrittweite der Tabellenbereiche $21A_1$ - $21A_k$, $21B_1$ - $21B_k$ ist, eine Korrektur des Adreßzählerwertes AZW erfolgt. Diese Korrektur durch Hinauf- oder Herabsetzen des Adreßzählerwertes AZW erfolgt dabei solange, bis die ermittelte Abweichung zwischen den Werten SPM und IPM kleiner als die kleinste Ansteuer-Schrittweite ist. Eine nochmalige Verbesserung ergibt sich, wenn eine derartige Korrektur des Adreßzählerwertes AZW bereits bei einer Abweichung von Soll- und Istpositionsmeßwert SPM, IPM erfolgt, die größer als die halbe minimale Ansteuer-Schrittweite ist. Damit läßt sich erreichen, daß der maximale Fehler in der Positionsmessung in der Größenordnung der halben Ansteuer-Schrittweite liegt.

Eine weitere Steigerung der Meßgenauigkeit bzw. weitere Fehlerminimierung um den Faktor j läßt sich erreichen, wenn in den Umrechnungstabellen 21A, 21B ein ganzzahliges Vielfaches j der benötigten Signalamplitudenwerte abgelegt wird, d.h. j Signalperioden der entsprechenden Sinus- oder Cosinus-Funktion. Im Grenzfall könnten dabei eine derartige Anzahl j an Signalperioden abgelegt werden, daß diese der kompletten Meßlänge entsprechen. Die Ursache für die Fehlerminimierung liegt bei einem derartigen Vorgehen darin, daß im Fall mehrerer abgelegter Signalperioden der nichtganzzahlige Rest aus dem Verhältnis zwischen den Signalperioden und der Wellenlänge kleiner ist als z.B. im Fall lediglich einer einzigen Signalperiode. Insgesamt resultiert dabei ein um den Faktor j kleinerer kumulativer Fehler.

Eine zweite Fehlerquelle liegt in den während der Messung schwankenden Umgebungsbedingungen wie etwa Luftdruck p, Temperatur T und Feuchte f. Zu den schwankenden Umgebungsbedingungen zählt desweiteren die jeweilige Gas-Zusammenstzung im Meßraum.

Mit den Parametern p, T, f und ggf. auch der Gas-Zusammensetzung ändert sich auch die Wellenlänge $\lambda_{Luft}$ der im Interferometer eingesetzten Strahlungsquelle, d.h. die Signalperiode SP der Inkrementalsignale SIN, COS. Unverändert bleibt jedoch die ausgangsseitige Signalperiode SP' der analogen Inkrementalsignale SIN', COS'. Damit wiederum ist ohne Korrektur nicht gewährleistet, daß die gewünschte Beziehung SP' = n * SP zwischen den ein- und ausgangsseitigen Signalperioden SP und SP' gilt.

Aus diesem Grund ist bei der in Figur 4 gezeigten Ausführungsform der Signalperioden-Variationseinheit 26 vorgesehen, in die Ermittlung des Sollpositions-Meßwertes SPM über die Prozessoreinheit 27 auch die Umgebungsparameter miteinzubeziehen, d.h. SPM = f(p,T,f). Hierbei gehen die Umgebungsparameter p, T, f und ggf. auch die Gas-Zusammensetzung in die bei der Bestimmung von SPM gemäß Gl. (1) herangezogene Wellenlänge $\lambda_{Luft}$ ein. Über geeignete Erfassungsmittel 39 werden deshalb sensormäßig laufend die Umgebungsparameter wie Luft-Temperatur, -Feuchte und -Druck sowie evtl. auch die Gas-Zusammensetzung detektiert, über die Datenleitung 33 der Prozessoreinheit 27 zugeführt und bei der Bestimmung des Sollpositions-Meßwertes SPM berücksichtigt. Hierzu wird in der Prozessoreinheit 27 laufend die Wellenlänge $\lambda_{Luft}$ über die bekannte Edlen-Formel aktualisiert und bei der Bestimmung von SPM berücksichtigt. Über die beschriebene Korrektur in Form des Herauf- oder Herabsetzen des Adreßzählerwertes AZW im Fall der Abweichung von Soll- und Istpositions-Meßwert SPM, IPM werden auch die Umgebungseinflüsse auf die Positionsgenauigkeit minimiert. Ausgangsseitig weisen die analogen Inkrementalsignale SIN', COS' dann maximal einen Fehler auf, der in der Größenordnung der Auflösung eines Tabellenbereiches $21A_1$ - $21A_k$, $21B_1$ - $21B_k$ bzw. eines halben Tabellenbereiches liegt, je nach gewählter Korrektur-Schrittweite.

Alternativ zur erwähnten Erfassung der Umgebungs-Parameter könnte auch vorgesehen werden, den Brechungsindex der Luft im Meßraum über eine Brechungsindex-Bestimmungseinheit, z.B. über ein Refraktometer direkt zu ermitteln und der Prozessoreinheit 27 zur Weiterverarbeitung zuzuführen. Die Prozessoreinheit 27 zieht die Ausgangssignale des Refraktometer zusätzlich zur Bestimmung des aktuellen Sollpositions-Meßwertes heran.

In Figur 4 ist desweiteren ein Datenspeicher 40 schematisiert angedeutet, in dem meßanordnungsspezifische Kompensationsdaten KD abgelegt sind. Hierbei handelt es sich im Fall einer Werkzeugmaschine beispielsweise um maschinenspezifische Korrekturdaten bezüglich Spindelsteigungsfehlern, Führungsfehlern, thermischen Fehlern etc., die während der Positionsbestimmung ähnlich den Umgebungs-Parametem p, T, f ebenfalls der Prozessoreinheit 27 zugeführt werden. Von der Prozessoreinheit 27 werden diese Daten KD ebenfalls in die laufende Bestimmung des Sollpositions-Meßwertes SPM einbezogen und über die beschriebene Korrektur bei der Ausgabe der analogen Inkrementalsignale berücksichtigt, d.h. SPM = f(KD).

Desweiteren besteht die Möglichkeit etwa im Fall einer Positionsmeßeinrichtung mit körperlich ausgebildeter Maßstabteilung eventuell vorhandene Teilungsfehler vorab zu ermitteln und geeignete Korrekturdaten diesbezüglich in einem Speicher abzulegen. Von der Prozessoreinheit können auch diese meßsystemspezifischen Korrekturdaten im Verlauf der Messung berücksichtigt werden.

Neben den dargestellten Ausführungsbeispielen existieren selbstverständlich weitere Möglichkeiten, die erfindungsgemäße Positionsmeßeinrichtung auszugestalten.

**Patentansprüche**

1. Positionsmeßeinrichtung zur Bestimmung der Relativposition zweier zueinander beweglicher Objekte, welche im Fall der Relativbewegung mindestens ein Paar phasenversetzter, analoger Inkrementalsignale (SIN, COS) liefert, mit einer Signalperioden-Variationseinheit (6), über die eine definierte Variation der Signalperioden (SP) der Inkrementalsignale (SIN', COS') um mindestens einen Signalperioden-Variationsfaktor (n) möglich ist, so dass modifizierte analoge sinusförmige Inkrementalsignale (SIN', COS') mit einer vergrößerten Signalperiode (SP') resultieren und
die Signalperioden-Variationseinheit (26) ferner Korrekturmittel (25, 27, 38) zur Eliminierung von Fehlern umfaßt, die bei der Positionsbestimmung resultieren und wobei die Signalperioden-Variationseinheit (26) mindestens einen Speicherbaustein (41) mit mindestens einer Umrechnungstabelle (21A, 21 B) umfaßt, die mehrere adressierte und ansteuerbare Tabellenbereiche ($21A_1$ - $21A_k$, $21B_1$ - $21B_k$) aufweist, denen jeweils definierte Signalamplitudenwerte der Inkrementalsignale (SIN', COS') zugeordnet sind.

2. Positionsmeßeinrichtung nach Anspruch 1, **dadurch gekennzeichnet, dass** auch die unveränderten Inkrementalsignale (SIN, COS) mit der ursprünglichen Signalperiode (SP) übertragbar sind.

3. Positionsmeßeinrichtung nach Anspruch 1, **dadurch gekennzeichnet, dass** die Signalperioden-Variationseinheit (6) mindestens eine erste Interpolatoreinheit (9) und einen Speicherbaustein (11) mit mindestens einer Umrechnungstabelle zur Ansteuerung mindestens einer ausgangsseitig angeordneten D/A-Wandlereinheit (12A, 12B) umfaßt.

4. Positionsmeßeinrichtung nach Anspruch 1, **dadurch gekennzeichnet, dass** der Speicherbaustein (41) pro vorgesehenem Signalperioden-Variationsfaktor (n) mindestens eine Umrechnungstabelle (21A, 21B) umfaßt.

5. Positionsmeßeinrichtung nach Anspruch 1, **dadurch gekennzeichnet, dass** die Signalperioden-Variationseinheit (6; 26) eingangsseitig eine Interpolatoreinheit (29) zur Erzeugung von interpolierten Digitalsignalen sowie eine Richtungserkennungseinheit (23) umfaßt, denen jeweils die von der Positionsmeßeinrichtung gelieferten Inkrementalsignale (SIN, COS) zuführbar sind und desweiteren den Ausgängen der Interpolatoreinheit (29) und der Richtungserkennungseinheit (23) eine Adreßzählereinheit (24) nachgeordnet ist, über die ausgangsseitig die adressierten Tabellenbereiche ($21A_1$ - $21A_k$, $21B_1$ - $21B_k$) der mindestens einen Umrechnungstabelle (21A, 21 B) im Speicherbaustein (41) ansteuerbar sind.

6. Positionsmeßeinrichtung nach Anspruch 5, **dadurch gekennzeichnet, dass** zur Variation der Signalperiode (SP') die Adreßzählereinheit (24) je nach auszugebender Signalperiode (SP') die Umrechnungstabelle (21A, 21 B) in einer zugehörigen Ansteuer-Schrittweite ansteuert.

7. Positionsmeßeinrichtung nach Anspruch 5, **dadurch gekennzeichnet, dass** dem mindestens einen Speicherbaustein (41) mindestens eine D/A-Wandlereinheit (22A, 22B) nachgeordnet ist, die aus den vom Speicherbaustein (41) übermittelten Signalamplitudenwerten analoge Inkrementalsignale (SIN', COS') erzeugt.

8. Positionsmeßeinrichtung nach Anspruch 1, **dadurch gekennzeichnet, dass** die Signalperioden-Variationseinheit (6; 26) als Korrekturmittel (25, 27, 38) eine Eingangszählereinheit (25), eine Durchlaufzählereinheit (38) sowie eine Prozessoreinheit (27) umfaßt, wobei

   - der Eingangszählereinheit (25) die Ausgangssignale der Interpolatoreinheit (29) zuführbar sind, woraus ein aktueller Sollpositions-Meßwert (SPM) ermittelbar ist,
   - die Durchlaufzählereinheit (38) die Anzahl der erfolgten Durchläufe durch die mindestens eine Umrechnungstabelle (21A, 21 B) bestimmt und
   - die Prozessoreinheit (27) derart ausgebildet ist, daß sie laufend über die Ausgangssignale der Eingangszählereinheit (25) den aktuellen Sollpositions-Meßwert bestimmt und mit einem aktuellen Istpositions-Meßwert (IPM) vergleicht, der sich aus dem aktuellen Stand der Adreßzählereinheit (24) und dem aktuellen Stand der Durchlaufzählereinheit (38) ergibt und im Fall einer Abweichung von Soll- und Istpositions-Meßwert (SPM, IPM) den Adreßzählerwert (AZW) der Adreßzählereinheit (24) definiert verändert.

9. Positionsmeßeinrichtung nach Anspruch 8, **dadurch gekennzeichnet, dass** die Korrekturmittel (25, 27, 38) desweiteren Erfassungmittel (39) zur laufenden sensormäßigen Bestimmung von Parametern (p, T, f) bezüglich der Meßumgebung umfassen und die erfaßten Parameter (p, T, f) der Prozessoreinheit (27) zuführbar sind, die diese zusätzlich zur Bestimmung des aktuellen Istpositions-Meßwertes (IPM) heranzieht.

10. Positionsmeßeinrichtung nach Anspruch 8, **dadurch gekennzeichnet, dass** die Korrekturmittel (25, 27, 38) desweiteren einen Datenspeicher (40) umfassen, in dem meßanordnungs-spezifische Kompensationsdaten (KD) abgelegt sind, die der Prozessoreinheit (27) zuführbar sind, die diese Kompensationsdaten (KD) zusätzlich zur Bestimmung des aktuellen Sollpositions-Meßwertes (SPM) heranzieht.

11. Positionsmeßeinrichtung nach Anspruch 8, **dadurch gekennzeichnet, dass** die Korrekturmittel (25, 27, 38) desweiteren eine Brechungsindexbestimmungseinheit umfassen, deren Ausgangssignale der Prozessoreinheit zuführbar sind, die diese Signale zusätzlich zur Bestimmung des aktuellen Sollpositions-Meßwertes heranzieht.

**Claims**

1. A position measuring device for determining the relative position of two objects movable relative to one another, which supplies at least one pair of phase offset analogue incremental signals (SIN, COS) in the event of the relative movement, with a signal period variation unit (6) through which a defined variation of the signal periods (SP) of the incremental signals (SIN', COS') by at least one signal period variation factor (n) is possible, so that modified analogue sinusoidal incremental signals (SIN', COS') with an increased signal period (SP') result and
the signal period variation unit (26) further comprises correction means (25, 27, 38) for eliminating errors which result in the position determination and
the signal period variation unit (26) comprises at least one memory module (41) with at least one conversion table (21A, 21B), which comprises a plurality of addressed and selectable table regions ($21A_1$ - $21A_k$, $21B_1$ - $21B_k$), with which are associated respective defined signal amplitude values of the incremental signals (SIN', COS').

2. A position measuring device according to claim 1, **characterized in that** the unaltered incremental signals (SIN, COS) can be transmitted with the original signal period (SP).

3. A position measuring device according to claim 1, **characterized in that** the signal period variation unit (6) comprises at least a first interpolation unit (9) and a memory module (11) with at least one conversion table for driving at least on D/A converter unit (12A, 12B) arranged at the output.

4. A position measuring device according to claim 1, **characterized in that** the memory module (41) has at least one conversion table (21A, 21B) per provided signal period variation factor (n).

5. A position measuring device according to claim 1, **characterized in that** the signal period variation unit (6; 26) comprises an interpolation unit (29) on the input side for generating interpolated digital signals and a direction recognition unit (23), to each of which can be fed the incremental signals (SIN, COS) provided by the position measuring device, and in addition an address counter unit (24) is connected to the outputs of the interpolation unit (29) and the direction recognition unit (23), through which address counter unit the addressed table regions ($21A_1$ - $21A_k$, $21B_1$ - $21B_k$) of the at least one conversion table (21A, 21B) in the memory module (41) can be selected on the output side.

6. A position measuring device according to claim 5, **characterized in that** in order to vary the signal period (SP') the address counter unit (24) selects the conversion table (21A, 21B) with an associated selection step size depending on the signal period (SP') to be provided.

7. A position measuring device according to claim 5, **characterized in that** at least one D/A converter unit (22A, 22B) follows the at least one memory module (41) and generates analogue incremental signals (SIN', COS') from the signal amplitude values transmitted from the memory module (41).

8. A position measuring device according to claim 1, **characterized in that** the signal period variation unit (6; 26) comprises an input counter unit (25), a pass counter unit (38) and a processor unit (27) as correction means (25, 27, 38),
wherein

- the output signals of the interpolation unit (29) can be fed to the input counter unit (25), from which a current target position measured value (SPM) can be determined,

- the pass counter unit (38) determines the number of passes effected through the at least one conversion table (21A, 21 B), and

- the processor unit (27) is so formed that it continuously determines the current target position measured value from the output signal of the input counter unit (25) and compares it with a current actual position measured value (IPM) which results from the current state of the address counter unit (24) and the current state of the pass counter unit (38) and, in the case of a discrepancy between the target and actual position measured values (SPM, IPM) modifies the address counter value (AZW) of the address counter unit (24) in defined manner.

9. A position measuring device according to claim 8, **characterized in that** the correction means (25, 27, 38) further comprise detection means (39) for continuous sensor determination of parameters (p, T, f) relating to the measuring environment and the detected parameters (p, T, f) can be fed to the processor unit (27), which additionally utilizes these for the determination of the current actual position measured value (IPM).

10. A position measuring device according to claim 8, **characterized in that** the correction means (25, 27, 38) further comprise a data memory (40) in which compensation data (KD) specific to the measuring arrangement are entered, which data can be fed to the processor unit (27) which additionally utilises these compensation data (KD) for the determination of the current target position measured value (SPM).

11. A position measuring device according to claim 8, **characterized in that** the correction means (25, 27, 38) further comprise a refractive index determination unit whose output signals can be fed to the processor unit, which additionally utilises these signals for the determination of the current target position measured value.

## Revendications

1. Dispositif de mesure de position pour déterminer la position relative de deux objets pouvant se déplacer l'un par rapport à l'autre, qui, en cas de déplacement relatif, délivre au moins une paire de signaux incrémentaux (SIN, COS) analogiques déphasés et dans lequel une unité de variation de période de signal (6) permet d'opérer une variation définie des périodes de signal (SP) des signaux incrémentaux (SIN', COS'), au moins d'un coefficient (n) de variation de période de signal en ce qu'il en résulte des signaux sinusoïdaux analogiques incrémentaux (SIN', COS') modifiés avec la période de signal (SP') augmenté et
l'unité de variation de période de signal (26) comporte en outre des moyens de correction (25, 27, 38) pour éliminer des erreurs résultant de la détermination de position et
l'unité de variation de période de signal (26) comporte au moins un module de mémoire (41) avec au moins un table de conversion (21A, 21 B) présentant plusieurs zones de table ($21A_1$ - $21A_k$, $21B_1$ - $21B_k$) adressées et susceptibles d'être activées, auxquelles sont associées respectivement des valeurs définies d'amplitude de signal des signaux incrémentaux (SIN', COS').

2. Dispositif de mesure de position selon la revendication 1, **caractérisé en ce que** les signaux incrémentaux (SIN, COS) non modifiés peuvent également être transmis avec la période de signal (SP) initiale.

3. Dispositif de mesure de position selon la revendication 1, **caractérisé en ce que** l'unité de variation de période de signal (6) comprend au moins une première unité d'interpolation (9) et un module de mémoire (11) avec au moins une table de conversion pour activer au moins une unité de convertisseur N/A (12A, 12B) disposée côté sortie.

4. Dispositif de mesure de position selon la revendication 1, **caractérisé en ce que** le module de mémoire (41) comprend au moins un table de conversion (21A, 21 B) pour chaque coefficient de variation de période de signal (n) prévu.

5. Dispositif de mesure de position selon la revendication 1, **caractérisé en ce que** l'unité de variation de période de signal (6; 26) comprend, côté entrée, une unité d'interpolation (29), destinée à générer des signaux numériques interpolés, ainsi qu'une unité d'identification de direction (23), qui peuvent recevoir respectivement les signaux incrémentaux (SIN, COS) délivrés par le dispositif de mesure de position, et qu'en outre, les sorties de l'unité d'interpolation (29) et de l'unité d'identification de direction (23) sont suivies en aval d'une unité de comptage d'adresses (24) qui permet d'activer, côté sortie, les zones de table ($21A_1$ - $21A_k$, $21B_1$ - $21B_k$) adressées de la table de conversion (21A, 21B), au nombre d'au moins une, dans le module de mémoire (41 ).

6. Dispositif de mesure de position selon la revendication 5, **caractérisé en ce que**, pour faire varier la période de signal (SP'), l'unité de comptage d'adresses (24) active la table de conversion (21A, 21B) avec une longueur de pas de commande associée, en fonction de la période de signal (SP') à délivrer.

7. Dispositif de mesure de position selon la revendication 5, **caractérisé en ce que** le module de mémoire (41), au nombre d'au moins un, est suivi d'au moins une unité de convertisseur N/A (22A, 22B) qui génère des signaux incrémentaux (SIN', COS') analogiques à partir des valeurs d'amplitude de signal transmises par le module de mémoire (41).

8. Dispositif de mesure de position selon la revendication 1, **caractérisé en ce que** l'unité de variation de période de signal (6; 26) comprend en tant que moyens de correction (25, 27, 38) une unité de comptage d'entrées (25), une unité de comptage de passages (38) et une unité à processeur (27), sachant que

- l'unité de comptage d'entrées (25) peut recevoir les signaux de sortie de l'unité d'interpolation (29), qui permettent de déterminer une valeur de mesure de position de consigne (SPM) actuelle,
- l'unité de comptage de passages (38) détermine le nombre de passages effectués dans la table de conversion (21A, 21 B), au nombre d'au moins une, et
- l'unité à processeur (27) est agencée de manière telle qu'elle calcule en continu la valeur de mesure de position de consigne actuelle, via les signaux de sortie de l'unité de comptage d'entrées (25), et la compare avec une valeur de mesure de position effective (IPM) actuelle qui résulte de la position actuelle de l'unité de comptage d'adresses (24) et de la position actuelle de l'unité de comptage de passages (38) et, en cas d'écart entre les valeurs de mesure de position de consigne et de position effective (SPM, IPM), modifie de manière définie la valeur de comptage d'adresses (AZW) de l'unité de comptage d'adresses (24).

9. Dispositif de mesure de position selon la revendication 8, **caractérisé en ce que** les moyens de correction (25, 27, 38) comprennent en outre des moyens de collecte (39) pour déterminer en continu, à l'aide de capteurs, des paramètres (p, T, f) concernant l'environnement de mesure, et que les paramètres (p, T, f) recueillis peuvent être transmis à l'unité à processeur (27) qui les utilise en plus pour déterminer la valeur de mesure de position effective (IPM) actuelle.

10. Dispositif de mesure de position selon la revendication 8, **caractérisé en ce que** les moyens de correction (25, 27, 38) comprennent en outre une mémoire de données (40) dans laquelle sont enregistrées des données de compensation (KD) spécifiques à l'agencement de mesure, pouvant être transmises à l'unité à processeur (27) qui utilise ces données de compensation (KD) en plus pour déterminer la valeur de mesure de position de consigne (SPM) actuelle.

11. Dispositif de mesure de position selon la revendication 8, **caractérisé en ce que** les moyens de correction (25, 27, 38) comprennent en outre une unité de détermination d'indice de réfraction, dont les signaux de sortie peuvent être transmis à l'unité à processeur qui les utilise en plus pour déterminer la valeur de mesure de position de consigne actuelle.

FIG. 1

FIG. 2

FIG. 3

FIG. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0552726 A2

- JP 2099826 A